# EUROPEAN PATENT APPLICATION

(11) **EP 2 354 574 A1**
(43) Date of publication of application: **10.08.2011**
(21) Application number: 11150950.1
(22) Date of filing: 14.01.2011
(51) Int. Cl.: F16B 25/00

(54) **Masonry anchor**

(30) Priority: 20.01.2010 US 690487
(71) Applicant: Powers Products III, LLC, Brewster, NY 10509 (US)
(72) Inventor: Gaudron, Paul, Harrington, DE 19952 (US); Olsen, Jacob, Roselle, IL 60172 (US)
(74) Representative: Baldwin, Mark

(57) **Abstract**

A masonry anchor includes a head (12) and a body (14) integral to the head (12) and extending therefrom. At least one helical male thread (18,20) surrounds the body and includes a leading face (34) substantially perpendicular to the body and a trailing face (36) disposed between the leading face (34) and the head (12). The trailing face (36) intersects the leading face (34) at a thread crest.

## Description

### BACKGROUND OF THE INVENTION

The subject matter disclosed herein relates to screw-type fasteners. More particularly, the subject invention relates to screw type masonry anchors.

In order to secure fixtures and other attachments to masonry, a screw-type anchor is often used. In anchors of this type, a helical cutting thread is formed on the shank of the anchor and acts to cut and tap the wall of a hole in the masonry when the anchor is turned into the hole, thereby retaining the anchor to the masonry. Typically, the cutting thread has a v-shaped cross-section wherein the flanks of the thread intersect at an included angle of 55-60 degrees. The diameter of a crest of the cutting thread is greater than the diameter of the hole into which the anchor is inserted so the cutting thread cuts the wall of the hole when inserted. In some anchors, multiple cutting threads, each having a crest diameter greater than the hole diameter may be utilized to increase a holding power of the anchor. The art would well receive a masonry screw with further improved holding power to retain attachments to masonry.

### SUMMARY OF THE INVENTION

According to one aspect of the invention, a masonry anchor includes a head and a body integral to the head and extending therefrom. At least one helical male thread surrounds the body and includes a leading face substantially perpendicular to the body and a trailing face disposed between the leading face and the head. The trailing face intersects the leading face at a thread crest.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:

FIG. 1 illustrates a top view of an embodiment of a masonry screw;

FIG. 2 illustrates a side view of an embodiment of a masonry screw;

FIG. 3 illustrates another side view of an embodiment of a masonry screw;

FIG. 4 illustrates a cross-sectional view of the masonry screw of FIG. 3;

FIG. 5 illustrates an end view of an embodiment of a masonry screw; and

FIG. 6 illustrates an enlarged view of a portion of FIG. 4.

The detailed description explains embodiments of the invention, together with advantages and features, by way of example with reference to the drawings.

### DETAILED DESCRIPTION

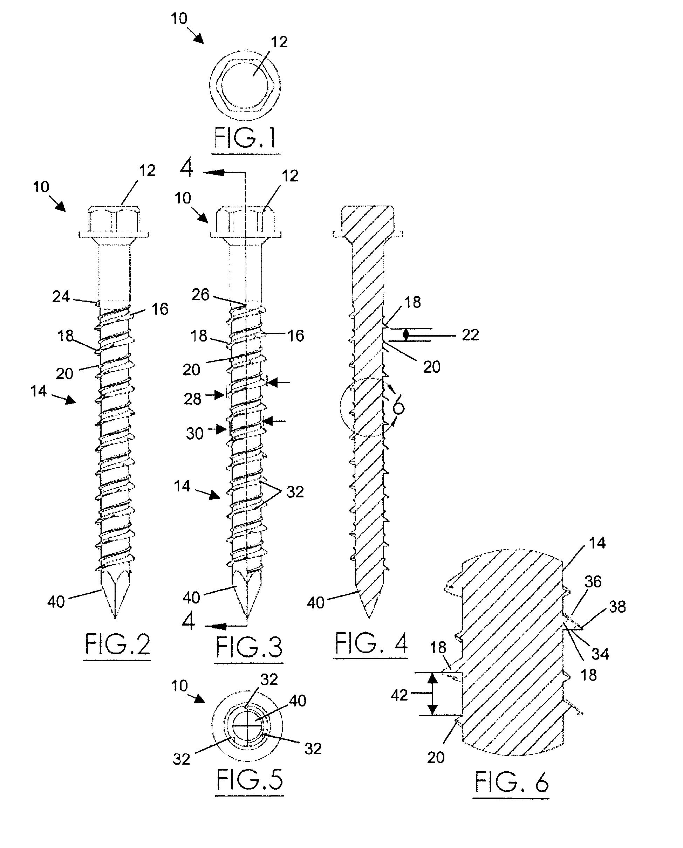

Shown in FIG. 1 is a top view of an embodiment of a masonry screw 10. The masonry screw 10 includes a head 12, which in some embodiments is hexagonal in configuration. Referring to FIG. 2, the masonry screw 10 includes a threaded body 14 extending from the head 12. The body 14 includes at least one male helical thread 16 extending along the body 14. In some embodiments, two threads 16 are utilized, but it is to be appreciated that other quantities of threads 16, for example, 3 or 4 threads 16 may be utilized. In some embodiments, as shown in FIGS. 3 and 4, a first thread 18 is separated from a second thread 20 by a distance 22, and a first lead 24 (shown in FIG. 2) of the first thread 18 is in a different circumferential position than a second lead 26 of the second thread 20. For example, the first lead 24 may be positioned 180 degrees from the second lead 26.

A first crest diameter 28 of the first thread 18 and a second crest diameter 30 of the second thread 20 are greater than a diameter of a hole in workpiece (not shown), for example masonry, into which the screw 10 is inserted. Thus, when the screw 10 is turned into the hole, the first thread 18 and second thread 20 cut female threads into the hole to increase a holding capability of the screw 10 in the workpiece. In some embodiments, as shown in FIG. 3, the first crest diameter 28 is greater than the second crest diameter 30. Referring to FIG. 3, the first thread 18 and/or the second thread 20 may include a plurality of notches 32, which in some embodiments are v-shaped and extend inwardly from the first crest diameter 28. The notches 32 are arrayed along the first thread 18 and/or the second thread 20 and may be located approximately every 120 degrees about the screw 10, as best shown in FIG. 5.

Referring to FIG 6, the first thread 18 includes a leading face 34 and a trailing face 36 which intersect at a first crest 38. As shown in FIG. 6, the leading face 34 is substantially perpendicular to the body 14. The leading face 34 is disposed between the trailing face 36 and a tip 40 (shown in FIG. 4) of the screw 10. As shown in FIG. 6, the trailing face 36 extends from the body 14 and may, in some embodiments, be a substantially straight line in cross-section. The trailing face 36 may have other cross-sectional shapes, however, including curved or arcuate. The second thread 20 is disposed at a distance 42 from the first thread 18. The second thread 20 may be configured substantially like the first thread 18. In some embodiments, however, as shown in FIG. 6, the second thread 20 is a male thread with a substantially v-shaped cross-section.

Referring again to FIG. 3, the tip 40 of screw 10 is configured as a nail point. In other embodiments, however, the tip 40 may have other configurations. For example, the first thread 18 and/or the second thread 20 may extend substantially to the tip 40.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A masonry anchor comprising:
a head (12);
a body (14) integral to the head and extending therefrom; and
at least one helical male thread (18, 20) surrounding the body, the at least one helical male thread including:
a leading face (34) substantially perpendicular to the body; and
a trailing face (36) disposed between the leading face and the head, the trailing face intersecting the leading face at a thread crest (38).

2. The masonry anchor of Claim 1, wherein the trailing face has a substantially straight cross-section.

3. The masonry anchor of Claim 1 or 2, wherein the at least one helical male thread comprises a first helical male thread (18) and a second helical male thread (20).

4. The masonry anchor of Claim 3, wherein a first crest diameter of the first helical male thread (18) is greater than a second crest diameter of the second helical male thread (20).

5. The masonry anchor of Claim 3 or 4, wherein a cross-section of the second helical male thread (20) is substantially V-shaped.

6. The masonry anchor of Claim 3, 4 or 5, wherein a lead (24) of the first helical male thread (18) is disposed about 180 degrees from a lead (26) of the second male helical thread (20).

7. The masonry anchor of any one of the preceding Claims, wherein the at least one male helical thread (18, 20) includes a plurality of notches (32) extending inwardly from the thread crest.

8. The masonry anchor of Claim 7, wherein each notch of the plurality of notches (32) is substantially v-shaped.

9. The masonry anchor of Claim 7 or 8, wherein adjacent notches of the plurality of notches (32) are disposed along the at least one male helical thread (18, 20) about 120 degrees apart.

10. A masonry anchor comprising:
at least one helical male thread (18, 20) surrounding a body (14), the at least one helical male thread including:
a leading face (34) substantially perpendicular to the body;
a trailing face (36) intersecting the leading face at a thread crest; and
a plurality of notches (32) extending inwardly from the thread crest.

11. The masonry anchor of Claim 10, wherein the at least one helical male thread comprises a first helical male thread (18) and a second helical male thread (20).

12. The masonry anchor of Claim 11, wherein a first crest diameter of the first helical male thread (18) is greater than a second crest diameter of the second helical male thread (20).

13. The masonry anchor of Claim 10, 11 or 12, wherein each notch of the plurality of notches (32) is substantially v-shaped.

14. The masonry anchor of any one of Claims 10 to 13, wherein adjacent notches of the plurality of notches (32) are disposed along the at least one male helical thread (18, 20) about 120 degrees apart.

15. The masonry anchor of any one of the preceding claims, comprising a nail point tip (40).
